# EUROPEAN PATENT APPLICATION

(11) **EP 2 046 022 A1**
(43) Date of publication of application: **08.04.2009**
(21) Application number: 08017256.2
(22) Date of filing: 01.10.2008
(51) Int. Cl.: H04N 5/335

(54) **Sensing element readout circuit and sensing array**

(30) Priority: 02.10.2007 GB 0719206; 18.10.2007 GB 0720403
(71) Applicant: Melexis NV, 8900 Ieper (BE)
(72) Inventor: Darmont, Arnaud, 8900 Ieper (BE)
(74) Representative: Wilson Gunn

(57) **Abstract**

A light sensing sensor unit 200, suitable for use in a sensing array of like units, comprises a photodiode 201 connected between ground and a reset transistor 202. The output of the photodiode 201 is also connected to a first capacitor 203a and to a second capacitor 203b via respective first and second shutter transistors 204a, 204b. Both capacitors 203a, 203b are operable, when connected to the photodiode 201 by respective first and second shutter transistors 204a, 204b, to integrate and store the output of the photodiode 201. Similarly, when connected to the reset transistor 202, each capacitor 203a, 203b can be reset by means of the reset transistor 202. Each capacitor 203a, 203b is connected via a respective readout means comprising a readout transistor 205a, 205b and a select output transistor 207a, 207b to column readout line 206. The readout transistors 205a, 205b in combination with the select output transistors 207a, 207b are operable to selectively connect the respective capacitor 203a, 203b to column readout line 206, when required.

## Description

The present invention relates to readout circuits for sensing elements and in particular to such for use in sensing arrays and wherein it is desired to determine a difference between a captured frame and a reference frame.

In a typical imaging system, images are captured by use of an array of sensing units, each unit comprising a sensing element and associated readout circuitry. The sensing element is operable to generate an electrical output in response to incident radiation. The readout circuitry is operable to integrate and store the electrical output of the sensing element for readout. Typically the readout circuitry will comprise a capacitor for integrating and storing the output of the sensing element and a readout transistor operable to allow the stored charge on the capacitor to be read out when required. The individual charges are read out row by row on column readout lines via the individual readout transistors.

In some systems, it is desirable to be able to compare captured frames against a reference frame, typically a preceding frame. This can provide additional information with regard to detecting movement in the captured image from frame to frame or for determining additional image details when illumination is varied between frames.

In a conventional system, this is achieved by capturing a first frame, reading out the first set of charges corresponding to the first frame, converting the readout values to digital values and storing the digital values in a storage means. The system will then go on to capture a second frame read out the second set of charges corresponding to the second frame, converting the readout values to digital values and storing the digital values in a storage means. Finally, the system will digitally compare the two sets of digital values to generate a comparison between frames.

This process involves a heavy processing load, a digital storage means and a number of stages. The provision of these features increases the expense of the array or the complete system, as in general, this solution is not implemented in the array itself. Additionally the number and complexity of the required stages makes this method slower than is desired.

It is therefore an object of the present invention to provide a sensing array that at least partially overcomes or alleviates these problems.

According to the present invention there is provided a readout circuit suitable for use with a sensing element of the type operable to generate an electrical output in response to stimulus, the readout circuit comprising: a plurality of integrating means each integrating means operable to integrate and store the output of the sensing element, during the period of connection to the sensing element; shutter means operable to selectively connect one of the plurality of integrating means to the output of the sensing element; and readout means operable to selectively connect one of the plurality of integrating means to a readout output line when required.

By use of the shutter means and readout means the readout circuit can integrate, store and selectively readout the response of a sensing element at different times.

According to a second aspect of the present invention there is provided a sensor unit comprising: a sensing element of the type operable to generate an electrical output in response to stimulus; and a readout circuit according to the first aspect of the present invention.

According to a third aspect of the present invention there is provided a sensing array comprising: a plurality of sensor units according to the second aspect of the present invention arranged in an array.

The sensing elements may be sensitive to any stimulus. Typically however, the invention might be applied to radiation sensing elements and most typically to infra red or visible radiation sensing elements.

The first and second integrating means may comprise capacitors. The readout means may comprise one or more transistors. Dedicated readout means may be provided for each integrating means. In one embodiment, the dedicated readout means each comprises a readout transistor and a select transistor connected between the readout output line and the integrating means.

Typically, the readout line may be a column readout line shared between all the sensor units in a single column of the array. The array may be readout row by row (or row section by row section) via the column readout lines as is known in the art.

The shutter means may comprise a dedicated shutter transistor for each integrating means.

In order to directly compare stored outputs, a comparator unit may be provided at the base of each output line. The comparator unit may comprise an amplifier and suitable other circuitry. The comparator may be provided with two inputs, each input connected to a storage capacitor. The storage capacitor acts as a so called sample and hold. A comparator selector switch may be provided enabling the column readout line to be selectively connected to each storage capacitor. Accordingly by reading out from the selected corresponding integrating means of each sensor unit row by row (or row section by row section) in turn the comparator can be used to directly generate a comparison between stored frames. This avoids the need for analogue to digital conversion and then digital comparison thus speeding up the comparison and reducing the processing power required. In order to readout an image directly one of the storage capacitors may be connected to a reference signal and/or the output of only one or other of the integrating means may be readout.

According to a fourth aspect of the present invention there is provided a method of operating an array according to the third aspect of the present invention to compare successive frames captured by the array comprising the steps of: capturing and storing a first frame using a first integrating means for each sensor unit; capturing and storing a second frame using a second integrating means for each sensor unit; reading out the stored outputs row by row (or row section by row section) for the first frame; reading out the stored outputs row by row (or row section by row section) for the second frame; comparing the readout outputs row by row (or row section by row section) for the first and second frames.

The fourth aspect of the present invention may incorporate any or all features of the third aspect of the present invention as are desired or are appropriate.

The second frame may be captured and stored simultaneously with the readout of the first frame. The first frame may remain stored and be readout and compared to a succession of subsequently captured frames. This may be done on a plurality of occasions until the stored first set of outputs degrades.

The comparison may take place directly by means of an analogue comparator means provided at the base of each readout line. In such an embodiment, method may involve the steps of reading out the first integrating unit on to first storage capacitor provided at the base of said column readout line and reading out the second integrating unit on to second storage capacitor provided at the base of said column readout line. The method may then involve connecting the first and second storage capacitors to the inputs of said comparator to directly generate a comparison.

In some applications, the invention may be used to compare the latest frame with the average over time of previously acquired frames. This can as an example be used for background subtraction applications in presence of moving objects. This may be achieved by applying the appropriate average value as a reference voltage to the comparator.

In order that the invention is more clearly understood it is described further below, by way of example only, and with reference to the accompanying drawings in which:
- Figure I: is a schematic diagram of a sensing element and associated readout circuitry as known from the prior art;
- Figure 2: is a timing diagram illustrating the stages in comparing successive captured frames using the sensing element and associated readout circuitry of figure 1;
- Figure 3: is a schematic diagram of a sensing element and associated readout circuitry according to the present invention;
- Figure 4: is a timing diagram illustrating the stages in comparing successive captured frames using the sensing element and associated readout circuitry of figure 3; and
- Figure 5: shows an analogue comparator arrangement suitable for use at the base of a column readout line in the present invention.

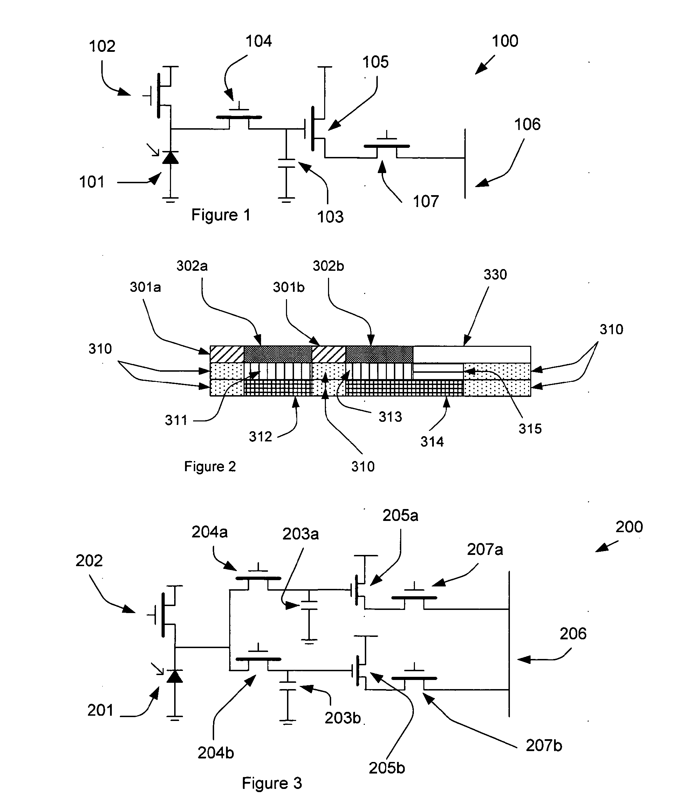

Referring now to figure 1 a prior art light sensing sensor unit 100, suitable for use in a sensing array of like units 100, is shown. The sensor unit 100 comprises a photodiode 101 connected between ground and a reset transistor 102. The output of the photodiode 101 is also connected to a capacitor 103 via a shutter transistor 104. The capacitor 103 is operable to integrate and store the output of the photodiode 101, at times when connected to the photodiode 101 by the shutter transistor 104. The capacitor 103 can be reset by means of the reset transistor 102. Also shown are readout means comprising a readout transistor 105 and a select output transistor 107, operable together to selectively connect the capacitor 103 to column readout line 106, when required.

Commonly, an array of such sensing units 100 will be used to capture images or frames. In some circumstances it may also be desirable to compare captured frames. The sequence of operations for comparing frames captured by an imaging array comprised of a plurality of such sensor units 100 is illustrated by figure 2. In this diagram: the top row relates to activities undertaken by the sensor units 100 of the imaging array; the middle row relates to activities of a digital signal processor (DSP) connected to the imaging array; and the bottom row relates to activities of a memory means connected to the DSP.

The initial step 301a is the capture of a first frame by the array. Simultaneously, the DSP and memory means are either idle or free for other processes 310. The first frame is readout and digitised from the individual sensor units 100 at step 302a, processed by the DSP 311 and stored in the memory means 312.

At step 301 b, a second frame is captured by the array. Simultaneously, the DSP and memory means are either idle or free for other processes 310. The second frame is readout and digitised from the individual sensor units 100 at step 302b processed by the DSP 313 and stored in the memory means 314. By "processed by the DSP" it has to be understood as at least a direct memory access (DMA) from the sensor device to the memory and maybe some image pre-processing activities. The DSP is then able to calculate the difference between pixels in the first and second frames at 315 and store them in the memory means at 314. The memory operation at 314 corresponds to both the storage of the second image and the necessary read and write operations out and in the memory to perform the subtraction. It may be possible to perform these operations in parallel.

At 330, the array can remain idle or progress to capture of further frames. Simultaneously the DSP and memory means are either idle or free for other processes 310.

Turning now to figure 3, a light sensing sensor unit 200, suitable for use in a sensing array of like units, is shown. The sensor unit 200 comprises a photodiode 201 connected between ground and a reset transistor 202. The output of the photodiode 201 is also connected to a first capacitor 203a and to a second capacitor 203b via respective first and second shutter transistors 204a, 204b. Both capacitors 203a, 203b are operable, when connected to the photodiode 201 by respective first and second shutter transistors 204a, 204b, to integrate and store the output of the photodiode 201. Similarly, when connected to the reset transistor 202, each capacitor 203a, 203b can be reset by means of the reset transistor 202. Each capacitor 203a, 203b is connected via a respective readout means comprising a readout transistor 205a, 205b and a select output transistor 207a, 207b to column readout line 206. The readout transistors 205a, 205b in combination with the select output transistors 207a, 207b are operable to selectively connect the respective capacitor 203a, 203b to column readout line 206, when required.

In the example shown in figure 3, the sensor unit 200 has only two capacitors 203a, 203b acting as integrating means. It is of course possible for the invention to be implemented with more than two integrating means, if desired or if appropriate. As in the example of figure 3, each integrating means would be provided with a shutter transistor and one or more readout transistors.

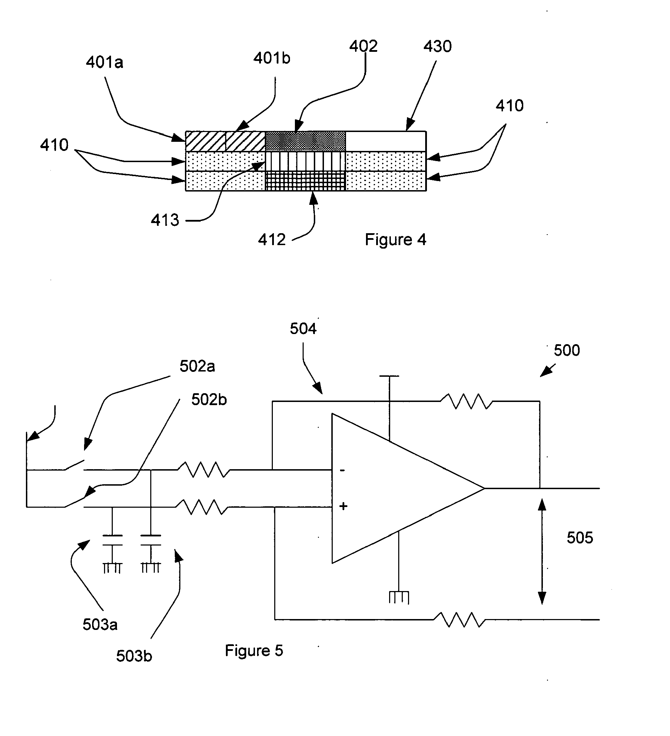

An array of such sensor units 200 can be used to capture images or frames. In some circumstances it may also be desirable to compare captured frames. The sequence of operations for comparing frames captured by an imaging array comprised of a plurality of such sensor units 200 is illustrated by figure 4. In this diagram: the top row relates to activities undertaken by the sensor units 200 of the imaging array; the middle row relates to activities of a digital signal processor (DSP) connected to the imaging array; and the bottom row relates to activities of a memory means connected to the DSP.

The initial step 401a is the capture of a first frame by the array, the first frame being stored on capacitors 203a of the sensor units 200. The next step 401b is the capture of a second frame by the array, the second frame being stored on capacitors 203b of the sensor units 200. Simultaneously, the DSP and memory means are either idle or free for other processes 410.

The first and second frames are readout row by row (or row section by row section) from the individual sensor units 200, subtracted in analogue form and then digitised at step 402. Simultaneously, the digitised signals are processed by the DSP 411 and stored in the memory means 412.

At 430, the array can remain idle or progress to capture of further frames. Simultaneously the DSP and memory means are either idle or free for other processes 410. Accordingly, it can be seen that this process enabled by the provision of a pair of integrating capacitors 203a, 203b and the associated readout means for each sensor unit 200 is quicker and requires less processing power than the process of the prior art.

In figure 2 and figure 4, the same DSP time is assigned to idle or other processes, but the time for the complete operation is shorter, allowing for either more processing capability in the DSP or operation at a higher frame rate or a combination of both.

Figure 5 illustrates a comparator 504 provided at the base of the column readout line 206 for performing the analogue subtraction required in the process of the present invention. The readout line 206 is split into two lines controlled by switches 502a, 502b. Each line is connected to one input of the comparator 504 and to a respective storage capacitor 503a, 503b.

When capacitors 203a are readout, at 401a, the switch 502a writes the stored charge to capacitor 503a. Similarly, when capacitors 203b are readout at 401b, the switch 502b writes the stored charge to capacitor 503b. The comparator 504 can then directly generate an output signal across 505 indicative of the difference between the outputs of the photodiode 201 in successive frames. This reduces the amount of process steps and processing steps thereby allowing this comparison to be generated more quickly. The difference signal 505 can then be directly digitised and processed or stored as required.

In some circumstances, an initial frame may be captured and stored on capacitors 203a and a succession of different frames are then captured and stored on capacitors 203b. This allows a succession of different frames to be compared against a particular initial frame. This can be repeated many times if the stored outputs on capacitors 203a do not degrade.

The invention may of course be utilised with any suitable form of sensor adapted to sense any particular parameter. The invention may be applied to such sensors individually or as part of an array as required or as desired.

It is of course to be understood that the invention is not to be restricted to the details of the above embodiment, which is described by way of example only.

## Claims

1. A readout circuit suitable for use with a sensing element of the type operable to generate an electrical output in response to stimulus, the readout circuit comprising: a plurality of integrating means each integrating means operable to integrate and store the output of the sensing element, during the period of connection to the sensing element; shutter means operable to selectively connect one of the plurality of integrating means to the output of the sensing element; and readout means operable to selectively connect one of the plurality of integrating means to a readout output line when required.

2. A readout circuit as claimed in claim 1 wherein the first and second integrating means comprise capacitors.

3. A readout circuit as claimed in claim 1 or claim 2 wherein the readout means comprises one or more transistors.

4. A readout circuit as claimed in any preceding claim wherein dedicated readout means are provided for each integrating means, the dedicated readout means each comprising a readout transistor and a select transistor connected between the readout output line and the integrating means.

5. A readout circuit as claimed in any preceding claim wherein the shutter means comprises a dedicated shutter transistor for each integrating means.

6. A sensor unit comprising: a sensing element of the type operable to generate an electrical output in response to stimulus; and a readout circuit according to any preceding claim.

7. A sensing array comprising: a plurality of sensor units according to claim 6.

8. A sensing array as claimed in claims 7 wherein the readout line is a column readout line shared between all the sensor units in a single column of the array.

9. A sensing array as claimed in claim 8 wherein the array is readout row by row (or row section by row section) via the column readout lines.

10. A sensing array as claimed in claim 7 or claim 8 wherein a comparator unit is provided at the base of each output line.

11. A sensing array as claimed in claim 10 wherein the comparator unit is provided with two inputs, each input connected to a storage capacitor.

12. A sensing array as claimed in claim 11 wherein a comparator selector switch is provided enabling the column readout line to be selectively connected to each storage capacitor.

13. A sensing array as claimed in claim 11 or claim 12 wherein one of the storage capacitors is connected to a reference signal and/or the output of only one or other of the integrating means is readout.

14. A method of operating an array according to any one of claims 7 to 13 to compare successive frames captured by the array, the method comprising the steps of: capturing and storing a first frame using a first integrating means for each sensor unit; capturing and storing a second frame using a second integrating means for each sensor unit; reading out the stored outputs row by row (or row section by row section) for the first frame; reading out the stored outputs row by row (or row section by row section) for the second frame; comparing the readout outputs row by row (or row section by row section) for the first and second frames

15. A method as claimed in claim 14 wherein the second frame is captured and stored simultaneously with the readout of the first frame.

16. A method as claimed in claim 14 or claim 15 wherein the first frame remains stored and is readout and compared to a succession of subsequently captured frames.

17. A method as claimed in claim 16 wherein the comparison takes place directly by means of an analogue comparator means provided at the base of each readout line.

18. A method as claimed in any one of claims 14 to 17 wherein the method involves the steps of reading out the first integrating unit on to first storage capacitor provided at the base of said column readout line and reading out the second integrating unit on to second storage capacitor provided at the base of said column readout line.

19. A method as claimed in claim 18 wherein the method then involves connecting the first and second storage capacitors to the inputs of said comparator to directly generate a comparison.

20. A method as claimed in any one of claims 14 to 19 wherein the method is used to compare the latest frame with the average over time of previously acquired frames.
